(19) Europäisches Patentamt
European Patent Office
Office européen des brevets

(11) EP 3 872 129 A1

(12) **EUROPEAN PATENT APPLICATION**

(43) Date of publication:
**01.09.2021 Bulletin 2021/35**

(51) Int Cl.:
***C08L 21/00*** *(2006.01)* ***B60C 1/00*** *(2006.01)*
***C08L 45/00*** *(2006.01)* ***C08K 3/36*** *(2006.01)*

(21) Application number: **21153160.3**

(22) Date of filing: **25.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.02.2020 JP 2020029645**

(71) Applicant: **Sumitomo Rubber Industries, Ltd.**
**Kobe-shi, Hyogo 651-0072 (JP)**

(72) Inventor: **TAKAGI, Keiji**
**Chuo-ku, Kobe-shi,, Hyogo 651-0072 (JP)**

(74) Representative: **TBK**
**Bavariaring 4-6**
**80336 München (DE)**

(54) **TIRE COMPOSITION AND TIRE**

(57) The present invention aims to provide tire compositions which provide improved overall performance in terms of high-temperature grip performance and low-temperature grip performance, and tires including the tire compositions. The tire compositions contain at least one elastomer component, at least one filler, at least one cyclopentadiene resin, and at least one ester plasticizer, the at least one cyclopentadiene resin consisting of a hydrogenated dicyclopentadiene resin and/or a dicyclopentadiene-aromatic compound copolymer resin, the tire compositions satisfying the following relationship: Elastomer component content ≤ Filler content.

EP 3 872 129 A1

## Description

TECHNICAL FIELD

The present invention relates to tire compositions and tires.

BACKGROUND ART

Various techniques have been proposed to improve the grip performance of pneumatic tires. For example, Patent Literature 1 discloses a technique of incorporating predetermined amounts of two or more types of silica and fine particle zinc oxide while adjusting the ratio of the two types of silica within a predetermined range.

CITATION LIST

PATENT LITERATURE

Patent Literature 1: JP 2008-101127 A

SUMMARY OF INVENTION

TECHNICAL PROBLEM

As a result of extensive studies, the present inventor has revealed that the conventional techniques leave room for improvement with respect to overall performance in terms of high-temperature grip performance and low-temperature grip performance.

The present invention aims to solve the new problem discovered by the present inventor and provide tire compositions which provide improved overall performance in terms of high-temperature grip performance and low-temperature grip performance, and tires including the tire compositions.

SOLUTION TO PROBLEM

The present invention relates to a tire composition, containing: at least one elastomer component; at least one filler; at least one cyclopentadiene resin; and at least one ester plasticizer, the at least one cyclopentadiene resin consisting of a hydrogenated dicyclopentadiene resin and/or a dicyclopentadiene-aromatic compound copolymer resin, the tire composition satisfying the following relationship:

Elastomer component content $\leq$ Filler content.

The tire composition preferably satisfies the following relationship:

Ester plasticizer content $\leq$ Cyclopentadiene resin content.

The at least one elastomer component in the tire composition preferably has a total styrene content of 10% by mass or higher.

The tire composition preferably contains a liquid aromatic polymer having a weight average molecular weight of 10,000 or less.

Preferably, the tire composition contains at least one second resin that is different from the cyclopentadiene resin, and satisfies the following relationship:

Second resin content $\leq$ Cyclopentadiene resin content, and
the second resin includes an aromatic ring-containing resin.

The tire composition preferably contains a silica having a nitrogen adsorption specific surface area of 170 $m^2/g$ or more.

The tire composition preferably contains 100 to 125 parts by mass of the at least one filler per 100 parts by mass of the at least one elastomer component.

The tire composition preferably contains a mercapto silane coupling agent.

The tire composition preferably contains 80 parts by mass or less of the at least one cyclopentadiene resin per 100 parts by mass of the at least one elastomer component.

The present invention also relates to a tire, including a tire component including the tire composition.

The tire component is preferably a tread.

ADVANTAGEOUS EFFECTS OF INVENTION

The present invention provides tire compositions containing at least one elastomer component, at least one filler, at least one cyclopentadiene resin, and at least one ester plasticizer, wherein the at least one cyclopentadiene resin consists of a hydrogenated dicyclopentadiene resin and/or a dicyclopentadiene-aromatic compound copolymer resin, and the tire compositions satisfy the relationship: Elastomer component content ≤ Filler content. Such tire compositions provide improved overall performance in terms of high-temperature grip performance and low-temperature grip performance.

DESCRIPTION OF EMBODIMENTS

The tire compositions of the present invention contain at least one elastomer component, at least one filler, at least one cyclopentadiene resin, and at least one ester plasticizer. The at least one cyclopentadiene resin consists of a hydrogenated dicyclopentadiene resin and/or a dicyclopentadiene-aromatic compound copolymer resin. The tire compositions satisfy the relationship: Elastomer component content ≤ Filler content. Thus, the tire compositions provide improved overall performance in terms of high-temperature grip performance and low-temperature grip performance.

The tire compositions provide the above-described effect. The reason for this advantageous effect is not exactly clear, but may be explained as follows.

A composition containing a filler (carbon black, silica) in an amount larger than that of an elastomer component (e.g., a rubber component, including, for example, natural rubber, polybutadiene rubber, or styrene-butadiene rubber) tends to be hard and have the disadvantage of reduced low-temperature grip performance.

In contrast, the present invention combines an ester plasticizer with a cyclopentadiene resin (a hydrogenated dicyclopentadiene resin and/or a dicyclopentadiene-aromatic compound copolymer resin). These two components are highly compatible with each other and have a relationship in which they are combined to allow the cyclopentadiene resin to disperse better. Accordingly, the combination of the two components may be used in a composition containing a filler in an amount larger than that of an elastomer component to prepare a composition in which the elastomer is plasticized and the cyclopentadiene resin is well dispersed. The resulting tire composition of the present invention is soft at low temperature and undergoes a large energy loss at high temperature, thus providing improved overall performance in terms of high-temperature grip performance and low-temperature grip performance.

Therefore, the composition combining a cyclopentadiene resin with an ester plasticizer can provide synergistically improved overall performance in terms of high-temperature grip performance and low-temperature grip performance even though it satisfies the relationship: Elastomer component content ≤ Filler content.

Chemicals which may be used in such tire compositions are described below.

Any elastomer component may be used, and examples include thermoplastic elastomers and rubber components. These may be used alone or in combinations of two or more. Rubber components are preferred among these.

Herein, the term "elastomer component" refers to an elastic polymer component that serves as a base material of a composition.

The weight average molecular weight (Mw) of the elastomer components is preferably 50,000 or more, more preferably 150,000 or more, still more preferably 350,000 or more. The upper limit of the Mw is not limited, but is preferably 4,000,000 or less, more preferably 3,000,000 or less.

Any thermoplastic elastomer may be used, and examples include olefin thermoplastic elastomers, styrene thermoplastic elastomers, vinyl chloride thermoplastic elastomers, urethane thermoplastic elastomers, polyamide thermoplastic elastomers, polyester thermoplastic elastomers, and fluorine thermoplastic elastomers. These may be used alone or in combinations of two or more. Styrene thermoplastic elastomers are preferred among these.

The styrene thermoplastic elastomers may be any thermoplastic elastomer having a styrene unit, preferably a styrene block unit. Examples include styrene-isobutylene-styrene block copolymers (SIBS), styrene-isoprene-styrene block copolymers (SIS), styrene-isobutylene block copolymers (SIB), styrene-butadiene-styrene block copolymers (SBS), styrene-ethylene/butene-styrene block copolymers (SEBS), styrene-ethylene/propylene-styrene block copolymers (SEPS), styrene-ethylene/ethylene/propylene-styrene block copolymers (SEEPS), and styrene-butadiene/butylene-styrene block copolymers (SBBS). These may be used alone or in combinations of two or more. SIS, SBS, SEBS, and SBBS are preferred among these, with SIS or SEBS being more preferred.

Commercial thermoplastic elastomers manufactured or sold by Kaneka Corporation, Kraton Polymers, Asahi Kasei Corporation, etc. may be used.

Any rubber component may be used, and examples include diene rubbers such as isoprene-based rubbers, polybutadiene rubber (BR), styrene-butadiene rubber (SBR), styrene-isoprene-butadiene rubber (SIBR), acrylonitrile-butadiene rubber (NBR), chloroprene rubber (CR), and butyl rubber (IIR); acrylic rubbers such as butyl acrylate rubber, ethyl acrylate rubber, and octyl acrylate rubber; nitrile rubbers; isobutylene rubbers; silicone rubbers (millable type, room temperature vulcanizable type); and fluororubbers. These rubber components may be used alone or in combinations of

two or more. Among these, diene rubbers are preferred, isoprene-based rubbers, BR, and SBR are more preferred, and SBR is still more preferred. Also preferred are combinations of SBR with isoprene-based rubbers and/or BR, with combinations of SBR, isoprene-based rubbers, and BR being more preferred.

The amount of the rubber components based on 100% by mass of the elastomer components is preferably 20% by mass or more, more preferably 50% by mass or more, still more preferably 70% by mass or more, particularly preferably 80% by mass or more, most preferably 90% by mass or more, and may be 100% by mass. When the amount is within the range indicated above, the advantageous effect tends to be better achieved.

The amount of the diene rubbers based on 100% by mass of the elastomer components is preferably 20% by mass or more, more preferably 50% by mass or more, still more preferably 70% by mass or more, particularly preferably 80% by mass or more, most preferably 90% by mass or more, and may be 100% by mass. When the amount is within the range indicated above, the advantageous effect tends to be better achieved.

Any SBR may be used, and examples include those generally used in the tire industry, such as emulsion-polymerized SBR (E-SBR) and solution-polymerized SBR (S-SBR). These may be used alone or in combinations of two or more.

The SBR preferably has a styrene content of 3% by mass or higher, more preferably 5% by mass or higher, still more preferably 10% by mass or higher, particularly preferably 15% by mass or higher, most preferably 20% by mass or higher, further preferably 25% by mass or higher, further preferably 30% by mass or higher, but preferably 60% by mass or lower, more preferably 55% by mass or lower, still more preferably 50% by mass or lower, particularly preferably 45% by mass or lower, most preferably 40% by mass or lower. When the styrene content is within the range indicated above, the advantageous effect tends to be more suitably achieved.

The SBR may be either unmodified or modified SBR.

The modified SBR may be any SBR having a functional group interactive with a filler such as silica. For example, it may be a chain end-modified SBR obtained by modifying at least one chain end of SBR with a compound (modifier) having the functional group (i.e., a chain end-modified SBR terminated with the functional group); a backbone-modified SBR having the functional group in the backbone; a backbone- and chain end-modified SBR having the functional group in both the backbone and chain end (e.g., a backbone- and chain end-modified SBR in which the backbone has the functional group and at least one chain end is modified with the modifier); or a chain end-modified SBR that has been modified (coupled) with a polyfunctional compound having two or more epoxy groups in the molecule so that a hydroxy or epoxy group is introduced. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may have a substituent. Amino groups (preferably amino groups whose hydrogen atom is replaced with a C1-C6 alkyl group), alkoxy groups (preferably C1-C6 alkoxy groups), alkoxysilyl groups (preferably C1-C6 alkoxysilyl groups), and amide groups are preferred among these.

SBR products manufactured or sold by Sumitomo Chemical Co., Ltd., JSR Corporation, Asahi Kasei Corporation, Zeon Corporation, TRINSEO, etc. may be used as the SBR.

The amount of the SBR based on 100% by mass of the elastomer components is preferably 20% by mass or more, more preferably 40% by mass or more. The upper limit is not limited and may be 100% by mass. However, the amount of the SBR, when used together with other elastomer components, is preferably 95% by mass or less, more preferably 90% by mass or less, still more preferably 80% by mass or less, particularly preferably 70% by mass or less, most preferably 60% by mass or less, further preferably 55% by mass or less, further preferably 53% by mass or less. When the amount is within the range indicated above, the advantageous effect tends to be better achieved.

Any BR may be used, and examples include those generally used in the tire industry, such as BR having high cis content (high cis BR), 1,2-syndiotactic polybutadiene crystal (SPB)-containing BR, and BR synthesized using rare earth catalysts (rare earth-catalyzed BR). These may be used alone or in combinations of two or more. Among these, rare earth-catalyzed BR (in particular, rare earth-catalyzed BR synthesized using Nd catalysts) is preferred in order to more suitably achieve the advantageous effect.

The BR preferably has a cis content of 90% by mass or higher, more preferably 95% by mass or higher. The upper limit of the cis content is not limited and may be 100% by mass, but is preferably 98% by mass or lower. When the cis content is within the range indicated above, the advantageous effect tends to be more suitably achieved.

The BR preferably has a vinyl content of 10% by mass or lower, more preferably 5% by mass or lower, still more preferably 3% by mass or lower, particularly preferably 1.5% by mass or lower. The lower limit of the vinyl content is not limited, but is preferably 0.5% by mass or higher. When the vinyl content is within the range indicated above, the advantageous effect tends to be more suitably achieved.

The BR may be either unmodified or modified BR. Examples of the modified BR include those into which the above-mentioned functional groups are introduced. Preferred embodiments of the modified BR are as described for the modified SBR.

The BR may be commercially available from Ube Industries, Ltd., JSR Corporation, Asahi Kasei Corporation, Zeon Corporation, etc.

The amount of the BR based on 100% by mass of the elastomer components is preferably 5% by mass or more, more preferably 10% by mass or more although the lower limit is not limited. The amount is also preferably 80% by mass or less, more preferably 50% by mass or less, still more preferably 30% by mass or less, particularly preferably 20% by mass or less. When the amount is within the range indicated above, the advantageous effect tends to be more suitably achieved.

Examples of the isoprene-based rubbers include natural rubber (NR), polyisoprene rubber (IR), refined NR, modified NR, and modified IR. The NR may be one commonly used in the tire industry, such as SIR20, RSS#3, or TSR20. Non-limiting examples of the IR include those commonly used in the tire industry, such as IR2200. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These may be used alone or in combinations of two or more. NR is preferred among these.

The amount of the isoprene-based rubbers based on 100% by mass of the elastomer components is preferably 5% by mass or more, more preferably 10% by mass or more, still more preferably 20% by mass or more, particularly preferably 30% by mass or more, most preferably 40% by mass or more, but is preferably 80% by mass or less, more preferably 60% by mass or less. When the amount is within the range indicated above, the advantageous effect tends to be more suitably achieved.

The total styrene content of the elastomer components (the total amount of the styrene portions of the total elastomer components) is preferably 10% by mass or higher, more preferably 15% by mass or higher, but is preferably 50% by mass or lower, more preferably 40% by mass or lower, still more preferably 30% by mass or lower, particularly preferably 25% by mass or lower, most preferably 22% by mass or lower. When the total styrene content is within the range indicated above, the advantageous effect tends to be more suitably achieved. This is presumably because the presence of styrene in the elastomer components facilitates the achievement of a large energy loss at high temperature in the above-described mechanism, thereby further improving high-temperature grip performance.

The total styrene content of the elastomer components is calculated as $\sum$[(Amount of each styrene-containing elastomer) $\times$ (Styrene content of said each styrene-containing elastomer)/100]. For example, the total styrene content of elastomer components including 90% by mass of SBR(A) (styrene content: 40% by mass), 5% by mass of SBR(B) (styrene content: 25% by mass), and 5% by mass of BR is 37.25% by mass (= $90\times40/100 + 5\times25/100$).

Herein, the weight average molecular weight (Mw) and the number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The cis content (cis-1,4-butadiene unit content) and the vinyl content (1,2-butadiene unit content) can be determined by infrared absorption spectrometry. The aromatic unit content (preferably the styrene content) can be determined by $^1$H-NMR analysis.

The compositions (elastomer compositions, preferably rubber compositions) contain at least one cyclopentadiene resin, specifically a dicyclopentadiene-aromatic compound copolymer resin (DCPD-aromatic compound copolymer resin) and/or a hydrogenated dicyclopentadiene resin (hydrogenated DCPD resin). These may be used alone or in combinations of two or more. Among these, the hydrogenated DCPD resin is preferred in order to achieve better low-temperature grip performance, while the DCPD-aromatic compound copolymer resin is preferred in order to achieve better high-temperature grip performance. It is also preferred to use a combination of two or more such resins.

Herein, the term "dicyclopentadiene-aromatic compound copolymer resin" refers to a resin produced by copolymerizing dicyclopentadiene with an aromatic compound. It may be a hydrogenated dicyclopentadiene-aromatic compound copolymer resin.

The proportions of the aromatic compound and dicyclopentadiene may be appropriately selected. However, the aromatic content is preferably 2% by mass or higher, more preferably 5% by mass or higher, still more preferably 8% by mass or higher, but is preferably 30% by mass or lower, more preferably 20% by mass or lower, still more preferably 12% by mass or lower. When the aromatic content is within the range indicated above, the advantageous effect tends to be better achieved.

Herein, the term "aromatic content" refers to the amount of the unit derived from the aromatic compound based on 100% by mass of the dicyclopentadiene-aromatic compound copolymer resin.

The dicyclopentadiene-aromatic compound copolymer resin preferably has a weight average molecular weight (Mw) of 200 or more, more preferably 300 or more, still more preferably 500 or more, but preferably 5000 or less, more preferably 3000 or less, still more preferably 2000 or less, particularly preferably 1500 or less, most preferably 1000 or less. When the Mw is within the range indicated above, the advantageous effect tends to be better achieved.

The aromatic compound may be any compound having an aromatic ring. Examples include phenol compounds

such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone, and indene. These may be used alone or in combinations of two or more. Among these, phenol and styrene derivatives are preferred, styrene derivatives are more preferred, alkylstyrenes are still more preferred, and α-methylstyrene is particularly preferred.

The number of carbon atoms of the alkyl or alkoxy groups in the foregoing compounds is preferably 1 to 20, more preferably 1 to 12, still more preferably 1 to 8, particularly preferably 1 to 5, most preferably 1 to 3. The number of carbon atoms of the unsaturated hydrocarbon groups in the compounds is preferably 2 to 20, more preferably 2 to 12, still more preferably 2 to 5.

The aromatic compounds may have one substituent or two or more substituents on the aromatic ring. In the case of an aromatic compound having two or more substituents on the aromatic ring, the substituents may be located at any of the ortho, meta, and para positions. Also in the case of a styrene derivative having a substituent on the aromatic ring, the substituent may be at the ortho, meta, or para position with respect to the vinyl group of styrene.

These aromatic compounds may be used alone or in combinations of two or more.

Specific examples of the alkylphenols include methylphenol, ethylphenol, butylphenol, t-butylphenol, octylphenol, nonylphenol, decylphenol, and dinonylphenol. They may be those substituted at any of the ortho, meta, and para positions. Preferred among these is t-butylphenol, with p-t-butylphenol being more preferred.

Specific examples of the alkylnaphthols include compounds obtained by replacing the phenol moiety of the above-mentioned alkylphenols with naphthol.

Specific examples of the alkylstyrenes include compounds obtained by replacing the phenol moiety of the above-mentioned alkylphenols with styrene.

Specific examples of the alkoxyphenols include compounds obtained by replacing the alkyl groups of the above-mentioned alkylphenols with the corresponding alkoxy groups. Specific examples of the alkoxynaphthols include compounds obtained by replacing the alkyl groups of the alkylnaphthols with the corresponding alkoxy groups. Similarly, specific examples of the alkoxystyrenes include compounds obtained by replacing the alkyl groups of the alkylstyrenes with the corresponding alkoxy groups.

Examples of the unsaturated hydrocarbon group-containing phenols include compounds which contain at least one hydroxyphenyl group per molecule and in which at least one hydrogen atom of the phenyl group is replaced with an unsaturated hydrocarbon group. The unsaturated bond in the unsaturated hydrocarbon group may be a double bond or a triple bond.

Examples of the unsaturated hydrocarbon group include C2-C10 alkenyl groups.

Specific examples of the unsaturated hydrocarbon group-containing phenols include isopropenylphenol and butenylphenol. The unsaturated hydrocarbon group-containing naphthols and the unsaturated hydrocarbon group-containing styrenes are similarly described.

Herein, the term "hydrogenated dicyclopentadiene resin" refers to a dicyclopentadiene resin which has been hydrogenated.

Herein, the term "dicyclopentadiene resin" refers to a resin containing dicyclopentadiene as a main monomer component of the backbone (main chain) of the resin, but excludes dicyclopentadiene-aromatic compound copolymer resins. The amount of the unit derived from dicyclopentadiene based on 100% by mass of the resin is 50% by mass or more, preferably 80% by mass or more, more preferably 90% by mass or more, still more preferably 95% by mass or more, particularly preferably 98% by mass or more, most preferably 100% by mass. When the amount is within the range indicated above, the advantageous effect tends to be more suitably achieved.

Examples of the dicyclopentadiene resin include petroleum resins made mainly from dicyclopentadiene produced by dimerization of cyclopentadiene extracted from the C5 fraction of petroleum.

The hydrogenation may be carried out by known methods. Exemplary suitable methods include metal-catalyzed catalytic hydrogenation and hydrazine-based hydrogenation (for example, JP S59-161415 A, which is incorporated herein by reference). For example, the metal-catalyzed catalytic hydrogenation may be carried out by adding hydrogen under pressure in an organic solvent in the presence of a metal catalyst. Suitable examples of the organic solvent include tetrahydrofuran, methanol, and ethanol. These organic solvents may be used alone, or two or more of these may be used in admixture. Suitable examples of the metal catalyst include palladium, platinum, rhodium, ruthenium, and nickel. These metal catalysts may be used alone, or two or more of these may be used in admixture. The pressure to be applied is preferably 1 to 300 $kgf/cm^2$, for example.

The hydrogenated dicyclopentadiene resin preferably has a degree of hydrogenation of double bonds (hydrogenation degree) of 20 mol% or higher, more preferably 35 mol% or higher, still more preferably 50 mol% or higher, particularly preferably 65 mol% or higher, most preferably 80 mol% or higher, further most preferably 90 mol% or higher, even most preferably 100 mol%. When the hydrogenation degree is within the range indicated above, the advantageous effect tends to be more suitably achieved.

Herein, the degree of hydrogenation (hydrogenation degree) can be calculated from the rate of decrease in the double bond signals in the $^1$H-NMR spectrum. Herein, the term "degree of hydrogenation (hydrogenation degree)" refers to the degree of hydrogenation of double bonds.

The dicyclopentadiene-aromatic compound copolymer resin and the hydrogenated dicyclopentadiene resin each preferably have a softening point of 60 to 200°C. The upper limit of the softening point is more preferably 160°C or lower, still more preferably 150°C or lower, while the lower limit is more preferably 80°C or higher, still more preferably 90°C or higher. When the softening point is within the range indicated above, the advantageous effect tends to be more suitably achieved.

Herein, the softening point of the resins is determined as set forth in JIS K 6220-1:2001 using a ring and ball softening point measuring apparatus and defined as the temperature at which the ball drops down.

The dicyclopentadiene-aromatic compound copolymer resin and the hydrogenated dicyclopentadiene resin may be commercially available from ENEOS Corporation, Maruzen Petrochemical Co., Ltd., Exxon Mobil, etc.

Herein, the amounts of the structural units of the resins are determined by $^1$H-NMR analysis.

The amount of the at least one cyclopentadiene resin, specifically, the amount of the dicyclopentadiene-aromatic compound copolymer resin and/or hydrogenated dicyclopentadiene resin (the combined amount of the dicyclopentadiene-aromatic compound copolymer resin and the hydrogenated dicyclopentadiene resin) per 100 parts by mass of the elastomer components (preferably rubber components) is preferably 5 parts by mass or more, more preferably 10 parts by mass or more, still more preferably 15 parts by mass or more, but is preferably 80 parts by mass or less, more preferably 60 parts by mass or less, still more preferably 40 parts by mass or less, particularly preferably 30 parts by mass or less. When the amount is within the range indicated above, the advantageous effect tends to be better achieved.

The compositions preferably contain at least one resin other than the dicyclopentadiene-aromatic compound copolymer resin and the hydrogenated dicyclopentadiene resin, namely, at least one second resin that is different from the cyclopentadiene resins. In this case, high-temperature grip performance can be more suitably improved.

Non-limiting examples of the second resins include solid aromatic resins, rosin resins, acrylic resins, and unhydrogenated dicyclopentadiene resins. These may be used alone or in combinations of two or more. Aromatic resins (aromatic ring-containing resins) are preferred among these.

Aromatic resins (aromatic ring-containing resins) refer to polymers containing an aromatic compound as a structural component. The aromatic compound may be any compound containing an aromatic ring, and examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone, and indene. These may be used alone or in combinations of two or more.

Examples of the aromatic resins include $\alpha$-methylstyrene resins, coumarone-indene resins, aromatic modified terpene resins, and terpene aromatic resins. These may be used alone or in combinations of two or more. To better achieve the advantageous effect, $\alpha$-methylstyrene resins or aromatic modified terpene resins are preferred among these, with $\alpha$-methylstyrene resins being more preferred, with copolymers of $\alpha$-methylstyrene and styrene being still more preferred.

Examples of the $\alpha$-methylstyrene resins include $\alpha$-methylstyrene homopolymers and copolymers of $\alpha$-methylstyrene and styrene. Coumarone-indene resins refer to resins containing coumarone and indene as monomer components forming the backbone (main chain) of the resins. Examples of monomer components which may be contained in the backbone in addition to coumarone and indene include styrene, methylindene, and vinyltoluene. Examples of the aromatic modified terpene resins include resins obtained by modifying terpene resins with aromatic compounds (preferably styrene derivatives, more preferably styrene), and resins produced by hydrogenating the foregoing resins. Examples of the terpene aromatic resins include resins produced by copolymerizing terpene compounds and aromatic compounds (preferably styrene derivatives or phenol compounds, more preferably styrene), and resins produced by hydrogenating the foregoing resins. These may be used alone or in combinations of two or more.

The second resins (preferably aromatic resins) preferably have a softening point of 30°C or higher, more preferably 60°C or higher. The softening point is also preferably 160°C or lower, more preferably 130°C or lower. When the softening point is within the range indicated above, the advantageous effect tends to be better achieved.

The amount of the second resins (preferably aromatic resins) per 100 parts by mass of the elastomer components (preferably rubber components) is preferably 2 parts by mass or more. Moreover, the amount is 10 parts by mass or less, preferably 7 parts by mass or less. When the amount is within the range indicated above, the advantageous effect tends to be better achieved.

Preferably, the compositions contain at least one second resin that is different from the cyclopentadiene resins, and satisfy the relationship: Second resin content $\leq$ Cyclopentadiene resin content, and the second resin includes an aromatic resin (aromatic ring-containing resin). In this case, the advantageous effect tends to be better achieved. This is presumably because the incorporation of an aromatic ring-containing resin in an amount smaller than that of the cyclopentadiene resins facilitates the achievement of high compatibility with the rubber components in the above-described mechanism, thereby further improving high-temperature grip performance.

Moreover, the relationship: Second resin content ≤ Cyclopentadiene resin content is modified in the following form: Second resin content - Cyclopentadiene resin content ≤ 0. The value of "Second resin content - Cyclopentadiene resin content" is preferably -1 or less, more preferably -3 or less, still more preferably -5 or less, but is preferably -15 or more, more preferably -12 or more, still more preferably -10 or more. When the value is within the range indicated above, the advantageous effect tends to be better achieved.

Herein, the term "Second resin content" refers to the amount (parts by mass) of the second resins per 100 parts by mass of the elastomer components (preferably rubber components). Likewise, the term "Cyclopentadiene resin content" refers to the amount (parts by mass) of the cyclopentadiene resins per 100 parts by mass of the elastomer components (preferably rubber components).

The second resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., KRATON, etc.

The compositions contain at least one ester plasticizer.

The ester plasticizers may be any ester group-containing compound that is liquid at room temperature (25°C). Examples include phthalic acid derivatives, long-chain fatty acid derivatives, phosphoric acid derivatives, sebacic acid derivatives, and adipic acid derivatives. These may be used alone or in combinations of two or more. Phosphoric acid derivatives, sebacic acid derivatives, and adipic acid derivatives are preferred among these, with sebacic acid derivatives being more preferred.

Any phthalic acid derivative may be used, and examples include phthalic acid esters such as di-2-ethylhexyl phthalate (DOP) and diisodecyl phthalate (DIDP). Any long-chain fatty acid derivative may be used, and examples include long-chain fatty acid glycerol esters. Any phosphoric acid derivative may be used, and examples include phosphoric acid esters such as tris(2-ethylhexyl) phosphate (TOP) and tributyl phosphate (TBP). Any sebacic acid derivative may be used, and examples include sebacic acid esters such as di(2-ethylhexyl) sebacate (DOS) and diisooctyl sebacate (DIOS). Any adipic acid derivative may be used, and examples include adipic acid esters such as di(2-ethylhexyl) adipate (DOA) and diisooctyl adipate (DIOA) .

Phosphoric acid esters, sebacic acid esters, and adipic acid esters are preferred among these, with sebacic acid esters being more preferred. Moreover, specific preferred compounds include TOP, DOS, and DOA, with DOS being more preferred.

The glass transition temperature (Tg) of the ester plasticizers is preferably -110°C or higher, more preferably -100°C or higher, still more preferably -80°C or higher, but is preferably -20°C or lower, more preferably - 40°C or lower, still more preferably -55°C or lower. When the Tg is within the range indicated above, the advantageous effect tends to be more suitably achieved.

Herein, the glass transition temperature is measured using a differential scanning calorimeter (Q200, TA Instruments Japan) at a temperature increase rate of 10°C/min in accordance with JIS-K7121.

The ester plasticizers may be commercially available from Daihachi Chemical Industry Co., Ltd., Taoka Chemical Co., Ltd., etc.

The amount of the ester plasticizers per 100 parts by mass of the elastomer components (preferably rubber components) is preferably 0.5 parts by mass or more, more preferably 1 part by mass or more, but is preferably 15 parts by mass or less, more preferably 10 parts by mass or less, still more preferably 7 parts by mass or less, particularly preferably 5 parts by mass or less, most preferably 3 parts by mass or less. When the amount is within the range indicated above, the advantageous effect tends to be better achieved.

The compositions preferably satisfy the relationship: Ester plasticizer content ≤ Cyclopentadiene resin content. In this case, the advantageous effect tends to be better achieved. This is presumably because the satisfaction of the relationship: Ester plasticizer content ≤ Cyclopentadiene resin content facilitates the achievement of a large energy loss at high temperature in the above-described mechanism, thereby further improving high-temperature grip performance.

Moreover, the relationship: Ester plasticizer content ≤ Cyclopentadiene resin content is modified in the following form: Ester plasticizer content - Cyclopentadiene resin content ≤ 0. The value of "Ester plasticizer content - Cyclopentadiene resin content" is preferably -1 or less, more preferably -3 or less, still more preferably -5 or less, but is preferably -15 or more, more preferably -10 or more, still more preferably -8 or more. When the value is within the range indicated above, the advantageous effect tends to be better achieved.

Herein, the term "Ester plasticizer content" refers to the amount (parts by mass) of the ester plasticizers per 100 parts by mass of the elastomer components (preferably rubber components). Likewise, the term "Cyclopentadiene resin content" refers to the amount (parts by mass) of the cyclopentadiene resins per 100 parts by mass of the elastomer components (preferably rubber components).

The compositions may contain plasticizers other than the ester plasticizers.

Examples of the plasticizers other than the ester plasticizers include oils, liquid polymers, and liquid resins.

These may be used alone or in combinations of two or more. Oils or liquid polymers are preferred among these.

Examples of the oils include process oils, vegetable oils, and mixtures thereof. Examples of the process oils include paraffinic process oils, aromatic process oils, and naphthenic process oils. Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more. Aromatic process oils are preferred among these.

The oils may be commercially available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., etc.

The amount of the oils per 100 parts by mass of the elastomer components (preferably rubber components) is preferably 5 parts by mass or more, more preferably 10 parts by mass or more, still more preferably 15 parts by mass or more, but is preferably 50 parts by mass or less, more preferably 45 parts by mass or less, still more preferably 40 parts by mass or less. When the amount is within the range indicated above, the advantageous effect tends to be better achieved.

Herein, the amount of the oils incudes the amount of the oils contained in the oil extended rubbers, if used.

Liquid polymers refer to polymers (preferably rubber components) that are liquid at room temperature (25°C). Examples of the rubber components include rubber components as listed above. These may be used alone or in combinations of two or more. Among these, diene rubbers are preferred, isoprene-based rubbers, BR, and SBR are more preferred, BR and SBR are still more preferred, and SBR is particularly preferred. Farnesene polymers are also preferred.

The weight average molecular weight (Mw) of the liquid polymers is preferably $3.0\times10^3$ or more, more preferably $4.0\times10^3$ or more, but is preferably $1.0\times10^5$ or less, more preferably $1.5\times10^4$ or less, still more preferably $1.0\times10^4$ or less. When the Mw is within the range indicated above, the advantageous effect can be more suitably achieved.

As described above, preferred liquid polymers are liquid diene rubbers (liquid diene polymers) and liquid farnesene polymers.

Examples of the liquid diene polymers include liquid styrene-butadiene copolymers (liquid SBR), liquid polybutadiene polymers (liquid BR), liquid polyisoprene polymers (liquid IR), and liquid styrene-isoprene copolymers (liquid SIR). These may be used alone or in combinations of two or more. To more suitably achieve the advantageous effect, liquid aromatic polymers such as liquid SBR and liquid SIR are preferred among these, with liquid SBR being more preferred. The term "aromatic polymers refers to polymers containing an aromatic unit (for example, a unit derived from any of the above-mentioned aromatic compounds).

The liquid aromatic polymers (preferably liquid SBR) preferably have an aromatic unit content (preferably styrene content) of 10% by mass or higher, more preferably 20% by mass or higher, still more preferably 30% by mass or higher, particularly preferably 40% by mass or higher, most preferably 50% by mass or higher, but preferably 80% by mass or lower, more preferably 70% by mass or lower, still more preferably 60% by mass or lower. When the content is within the range indicated above, the advantageous effect can be more suitably achieved.

Liquid farnesene polymers refer to polymers produced by polymerizing farnesene as a monomer component. Examples include the polymers described in JP 2016-180118 A which is incorporated herein by reference.

The liquid farnesene polymers may be homopolymers of farnesene (farnesene homopolymers) or copolymers of farnesene and vinyl monomers (farnesene-vinyl monomer copolymers). These may be used alone or in combinations of two or more. Suitable examples of the vinyl monomers include styrene and butadiene.

The liquid polymers are preferably hydrogenated.

The degree of hydrogenation of the liquid polymers is preferably 20% by mass or higher, more preferably 40% by mass or higher, still more preferably 60% by mass or higher, but is preferably 99% by mass or lower, more preferably 90% by mass or lower, still more preferably 80% by mass or lower. When the degree of hydrogenation is within the range indicated above, the advantageous effect can be more suitably achieved.

The liquid polymers may be commercially available from Cray Valley, Kuraray Co., Ltd., etc.

Preferred liquid polymers are liquid aromatic polymers having a weight average molecular weight of 10,000 or less. With such liquid polymers, the advantageous effect tends to be better achieved. This is presumably because, when such liquid aromatic polymers are present, the elastomers are further plasticized and softened, which facilitates the achievement of high compatibility with the elastomer components and a large energy loss at high temperature in the above-described mechanism, thereby further improving overall performance in terms of high-temperature grip performance and low-temperature grip performance. Moreover, preferred liquid aromatic polymers are hydrogenated liquid aromatic polymers.

The amount of the liquid polymers per 100 parts by mass of the elastomer components (preferably rubber components) is preferably 1 part by mass or more, more preferably 3 parts by mass or more, but is preferably 15 parts by mass or less, more preferably 10 parts by mass or less, still more preferably 7 parts by mass or less. When the amount is within the range indicated above, the advantageous effect tends to be better achieved.

Liquid resins refer to resins that are liquid at room temperature (25°C).

Non-limiting examples of the resins include resins that are liquid at room temperature (25°C), such as styrene resins, alkylphenol resins, coumarone-indene resins, terpene resins, rosin resins, acrylic resins, unhydrogenated dicyclopentadiene resins, dicyclopentadiene-aromatic compound copolymer resins, and hydrogenated dicyclopentadiene resins. These may be used alone or in combinations of two or more.
The compositions contain at least one filler (preferably reinforcing filler).
Any filler (preferably reinforcing filler) may be used, and examples include carbon black, silica, calcium carbonate, talc, alumina, clay, aluminum hydroxide, aluminum oxide, and mica. These may be used alone or in combinations of two or more. To more suitably achieve the advantageous effect, carbon black, silica, and aluminum hydroxide are preferred among these. Also preferred are a combination of carbon black and aluminum hydroxide and/or a combination of silica and aluminum hydroxide.
The amount of the at least one filler (preferably the combined amount of carbon black, silica, and aluminum hydroxide) per 100 parts by mass of the elastomer components (preferably rubber components) is preferably 100 parts by mass or more, but is preferably 160 parts by mass or less, more preferably 150 parts by mass or less, still more preferably 140 parts by mass or less, particularly preferably 135 parts by mass or less, most preferably 130 parts by mass or less, further most preferably 125 parts by mass or less, still further most preferably 120 parts by mass or less. When the amount is within the range indicated above, the advantageous effect tends to be better achieved.
The compositions satisfy the following relationship: Elastomer component content ≤ Filler content.
The relationship is modified in the following form: Elastomer component content - Filler content ≤ 0. The value of "Elastomer component content - Filler content" is preferably -1 or less, more preferably -3 or less, still more preferably -5 or less, but is preferably -40 or more, more preferably -35 or more, still more preferably -30 or more. When the value is within the range indicated above, the advantageous effect tends to be better achieved.
Herein, the term "Elastomer component content" refers to the amount (parts by mass) of the elastomer components based on 100 parts by mass of the composition. Likewise, the term "Filler content" refers to the amount (parts by mass) of the fillers based on 100 parts by mass of the composition.
The compositions may contain silica. In this case, the advantageous effect tends to be better achieved.
Examples of the silica include dry silica (anhydrous silicic acid) and wet silica (hydrous silicic acid). Wet silica is preferred because it has a large number of silanol groups. These may be used alone or in combinations of two or more.
The nitrogen adsorption specific surface area ($N_2SA$) of the silica is preferably 50 $m^2/g$ or more, more preferably 80 $m^2/g$ or more, still more preferably 120 $m^2/g$ or more, particularly preferably 150 $m^2/g$ or more, most preferably 170 $m^2/g$ or more, further preferably 180 $m^2/g$ or more, further preferably 190 $m^2/g$ or more, further preferably 200 $m^2/g$ or more, further preferably 210 $m^2/g$ or more, further preferably 215 $m^2/g$ or more, further preferably 220 $m^2/g$ or more, further preferably 225 $m^2/g$ or more, further preferably 230 $m^2/g$ or more. The $N_2SA$ is also preferably 600 $m^2/g$ or less, more preferably 300 $m^2/g$ or less, still more preferably 250 $m^2/g$ or less, particularly preferably 240 $m^2/g$ or less. When the $N_2SA$ is within the range indicated above, the advantageous effect tends to be more suitably achieved. In particular, the compositions preferably contain a fine particle silica having a nitrogen adsorption specific surface area of 170 $m^2/g$ or more.
Herein, the $N_2SA$ of the silica is measured by the BET method in accordance with ASTM D3037-81.
The silica may be commercially available from Degussa, Rhodia, Tosoh Silica Corporation, Solvay Japan, Tokuyama Corporation, etc.
The amount of the silica per 100 parts by mass of the elastomer components (preferably rubber components) is preferably 3 to 160 parts by mass. In particular, when the amount of the silica based on 100% by mass of the fillers is 50% by mass or more, the amount of the silica per 100 parts by mass of the elastomer components (preferably rubber components) is preferably 70 parts by mass or more, more preferably 80 parts by mass or more, still more preferably 85 parts by mass or more, particularly preferably 90 parts by mass or more, but is preferably 140 parts by mass or less, more preferably 135 parts by mass or less, still more preferably 130 parts by mass or less, particularly preferably 115 parts by mass or less. When the amount is within the range indicated above, the advantageous effect tends to be more suitably achieved.
Moreover, when the amount of carbon black based on 100% by mass of the fillers is 50% by mass or more, the amount of the silica per 100 parts by mass of the elastomer components (preferably rubber components) is preferably 3 to 40 parts by mass.
The compositions may contain carbon black. In this case, the advantageous effect tends to be better achieved.
Any carbon black may be used, and examples include N134, N110, N220, N234, N219, N339, N330, N326, N351, N550, and N762. These may be used alone or in combinations of two or more.
The nitrogen adsorption specific surface area ($N_2SA$) of the carbon black is preferably 30 $m^2/g$ or more, more preferably 80 $m^2/g$ or more, still more preferably 100 $m^2/g$ or more, particularly preferably 120 $m^2/g$ or more, most preferably 135 $m^2/g$ or more, but is preferably 200 $m^2/g$ or less, more preferably 180 $m^2/g$ or less, still more preferably 160 $m^2/g$ or less. When the $N_2SA$ is within the range indicated above, the advantageous effect tends to be better achieved.
Herein, the $N_2SA$ of the carbon black is measured in accordance with JIS K6217-2:2001.

The carbon black may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The amount of the carbon black per 100 parts by mass of the elastomer components (preferably rubber components) is preferably 3 to 160 parts by mass. In particular, when the amount of the carbon black based on 100% by mass of the fillers is 50% by mass or more, the amount of the carbon black per 100 parts by mass of the elastomer components (preferably rubber components) is preferably 75 parts by mass or more, more preferably 80 parts by mass or more, still more preferably 85 parts by mass or more, particularly preferably 90 parts by mass or more, but is preferably 150 parts by mass or less, more preferably 140 parts by mass or less, still more preferably 130 parts by mass or less, particularly preferably 115 parts by mass or less. When the amount is within the range indicated above, the advantageous effect tends to be more suitably achieved.

Moreover, the amount of silica based on 100% by mass of the fillers is 50% by mass or more, the amount of the carbon black per 100 parts by mass of the elastomer components (preferably rubber components) is preferably 3 to 40 parts by mass. The upper limit is more preferably 20 parts by mass, still more preferably 10 parts by mass.

The compositions may contain aluminum hydroxide. In this case, the advantageous effect tends to be better achieved.

Any aluminum hydroxide may be used, and examples include those known in the tire industry. These may be used alone or in combinations of two or more.

The average primary particle size of the aluminum hydroxide is preferably 0.5 μm or more, more preferably 0.8 μm or more, but is preferably 10 μm or less, more preferably 5 μm or less. When the average primary particle size is within the range indicated above, the advantageous effect tends to be more suitably achieved.

Herein, the average primary particle size of the aluminum hydroxide refers to the number average particle size measured with a transmission electron microscope.

The aluminum hydroxide may be commercially available from Showa Denko K.K., Hayashi Kasei Co., Ltd., etc.

The amount of the aluminum hydroxide per 100 parts by mass of the elastomer components (preferably rubber components) is preferably 1 part by mass or more, more preferably 3 parts by mass or more, but is preferably 15 parts by mass or less, more preferably 12 parts by mass or less, still more preferably 10 parts by mass or less. When the amount is within the range indicated above, the advantageous effect tends to be more suitably achieved.

The compositions which contain silica preferably further contain at least one silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Degussa, Momentive, Shin-Etsu Silicone, Tokyo Chemical Industry Co., Ltd., AZmax. Co., Dow Corning Toray Co., Ltd., etc. may be used. These may be used alone or in combinations of two or more. Among these, sulfide and mercapto silane coupling agents are preferred, with mercapto silane coupling agents being more preferred, because then the advantageous effect tends to be better achieved.

The mercapto silane coupling agents may include, in addition to compounds containing mercapto groups, compounds containing mercapto groups protected by protecting groups (for example, compounds represented by the formula (III) below).

Particularly suitable mercapto silane coupling agents include silane coupling agents containing linking units A and B represented by the formulas (I) and (II) below, respectively, and silane coupling agents represented by the formula (III) below. Among these, the silane coupling agents of formula (III) are preferred.

The silane coupling agents containing linking units A and B represented by the formulas (I) and (II) below, respectively, are described below.

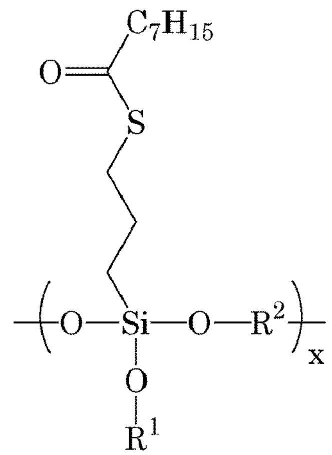

(I)

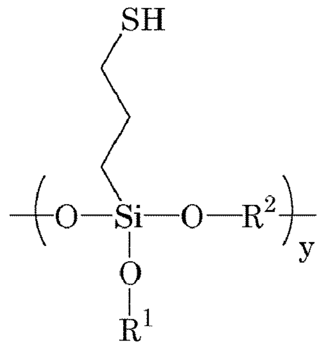

(II)

In the formulas, x represents an integer of 0 or more; y represents an integer of 1 or more; $R^1$ represents a hydrogen atom, a halogen atom, a branched or unbranched C1-C30 alkyl group, a branched or unbranched C2-C30 alkenyl group, a branched or unbranched C2-C30 alkynyl group, or the alkyl group in which a terminal hydrogen atom is replaced with a hydroxy or carboxyl group; and $R^2$ represents a branched or unbranched C1-C30 alkylene group, a branched or unbranched C2-C30 alkenylene group, or a branched or unbranched C2-C30 alkynylene group, provided that $R^1$ and $R^2$ may together form a cyclic structure.

The linking unit A content of the silane coupling agents containing the linking units A and B of formulas (I) and (II) is preferably 30 mol% or higher, more preferably 50 mol% or higher, but is preferably 99 mol% or lower, more preferably 90 mol% or lower. Moreover, the linking unit B content is preferably 1 mol% or higher, more preferably 5 mol% or higher, still more preferably 10 mol% or higher, but is preferably 70 mol% or lower, more preferably 65 mol% or lower, still more preferably 55 mol% or lower. Moreover, the combined content of the linking units A and B is preferably 95 mol% or higher, more preferably 98 mol% or higher, particularly preferably 100 mol%.

The linking unit A or B content refers to the amount including the linking unit A or B present at the end of the silane coupling agent, if any. When the linking unit A or B is present at the end of the silane coupling agent, its form is not limited as long as it forms a unit corresponding to the linking unit A formula (I) or linking unit B formula (II).

With respect to $R^1$ in formulas (I) and (II), examples of the halogen atom include chlorine, bromine, and fluorine; examples of the branched or unbranched C1-C30 alkyl group include methyl and ethyl groups; examples of the branched or unbranched C2-C30 alkenyl group include vinyl and 1-propenyl groups; and examples of the branched or unbranched C2-C30 alkynyl group include ethynyl and propynyl groups.

With respect to $R^2$ in formulas (I) and (II), examples of the branched or unbranched C1-C30 alkylene group include ethylene and propylene groups; examples of the branched or unbranched C2-C30 alkenylene group include vinylene and 1-propenylene groups; and examples of the branched or unbranched C2-C30 alkynylene group include ethynylene and propynylene groups.

In the silane coupling agents containing the linking units A and B of formulas (I) and (II) the total number of repetitions (x + y) consisting of the sum of the number of repetitions (x) of the linking unit A and the number of repetitions (y) of the linking unit B is preferably in the range of 3 to 300.

Examples of the silane coupling agents containing the linking units A and B of formulas (I) and (II) include NXT-Z15, NXT-Z30, NXT-Z45, and NXT-Z80 all available from Momentive. These may be used alone or in combinations of two or more.

The silane coupling agents represented by the following formula (III) are described below.

$$(C_pH_{2p+1}O)_3Si\text{-}C_qH_{2q}\text{-}S\text{-}CO\text{-}C_kH_{2k+1} \quad \text{(III)}$$

In the formula, p represents an integer of 1 to 3, q represents an integer of 1 to 5, and k represents an integer of 5 to 12.

The symbol p represents an integer of 1 to 3, preferably of 2. When p is within the range indicated above, the advantageous effect tends to be more suitably achieved.

The symbol q represents an integer of 1 to 5, preferably of 2 to 4, more preferably of 3. When q is within the range indicated above, the advantageous effect tends to be more suitably achieved.

The symbol k represents an integer of 5 to 12, preferably of 5 to 10, more preferably of 6 to 8, still more preferably of 7. When k is within the range indicated above, the advantageous effect tends to be more suitably achieved.

Examples of the silane coupling agents of formula (III) include NXT available from Momentive. The silane coupling agents of formula (III) may be used alone or in combinations of two or more.

The amount of the silane coupling agents per 100 parts by mass of the silica is preferably 0.5 parts by mass or more, more preferably 3 parts by mass or more, still more preferably 5 parts by mass or more, but is preferably 20 parts by mass or less, more preferably 15 parts by mass or less, still more preferably 10 parts by mass or less. When the amount is within the range indicated above, the advantageous effect tends to be better achieved.

The compositions preferably contain sulfur as a crosslinking agent (vulcanizing agent).

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be commercially available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc.

The amount of the sulfur per 100 parts by mass of the elastomer components (preferably rubber components) is preferably 0.1 parts by mass or more, more preferably 0.5 parts by mass or more, but is preferably 5 parts by mass or less, more preferably 3 parts by mass or less. When the amount is within the range indicated above, the advantageous effect tends to be better achieved.

The compositions preferably contain at least one vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolylsulfenamide, N-tert-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide or guanidine vulcanization accelerators are preferred among these. Combinations of sulfenamide and guanidine vulcanization accelerators may be used.

The vulcanization accelerators may be commercially available from Kawaguchi Chemical Industry Co., Ltd., Ouchi Shinko Chemical Industrial Co., Ltd., Rhein Chemie, etc.

The amount of the vulcanization accelerators per 100 parts by mass of the elastomer components (preferably rubber components) is preferably 0.5 parts by mass or more, more preferably 1 part by mass or more, but is preferably 10 parts by mass or less, more preferably 8 parts by mass or less. When the amount is within the range indicated above, the advantageous effect tends to be better achieved.

The compositions may contain waxes.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Petroleum waxes are preferred among these, with paraffin waxes being more preferred.

The waxes may be commercially available from Ouchi Shinko Chemical Industrial Co., Ltd., Nippon Seiro Co., Ltd., Seiko Chemical Co., Ltd., etc.

The amount of the waxes per 100 parts by mass of the elastomer components (preferably rubber components) is preferably 0.3 parts by mass or more, more preferably 0.5 parts by mass or more, but is preferably 20 parts by mass or less, more preferably 10 parts by mass or less. When the amount is within the range indicated above, the advantageous effect tends to be better achieved.

The compositions may contain antioxidants.

Examples of the antioxidants include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Preferred among these are p-phenylenediamine and/or quinoline antioxidants.

The antioxidants may be commercially available from Seiko Chemical Co., Ltd., Sumitomo Chemical Co., Ltd., Ouchi Shinko Chemical Industrial Co., Ltd., Flexsys, etc.

The amount of the antioxidants per 100 parts by mass of the elastomer components (preferably rubber components) is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The compositions may contain stearic acid.

The stearic acid may be a conventional one, e.g., available from NOF Corporation, Kao Corporation, FUJIFILM Wako Pure Chemical Corporation, or Chiba Fatty Acid Co., Ltd.

The amount of the stearic acid per 100 parts by mass of the elastomer components (preferably rubber components) is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The compositions may contain zinc oxide.

The zinc oxide may be a conventional one, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The amount of the zinc oxide per 100 parts by mass of the elastomer components (preferably rubber components) is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The compositions preferably contain at least one processing aid.

Examples of the processing aids include fatty acid metal salts, fatty acid amides, amide esters, silica surface activators, fatty acid esters, mixtures of fatty acid metal salts with amide esters, and mixtures of fatty acid metal salts with fatty acid amides. These may be used alone or in combinations of two or more. Preferred among these is at least one selected from the group consisting of fatty acid metal salts, amide esters, and mixtures of fatty acid metal salts with amide esters or fatty acid amides, more preferably from fatty acid metal salts.

Non-limiting examples of the fatty acids of the fatty acid metal salts include saturated or unsaturated fatty acids, preferably C6-C28, more preferably C10-C25, still more preferably C14-C20, saturated or unsaturated fatty acids, such as lauric acid, myristic acid, palmitic acid, stearic acid, oleic acid, linoleic acid, linolenic acid, arachidic acid, behenic acid, and nervonic acid. These may be used alone, or two or more of these may be used in admixture. Saturated fatty acids are preferred among these, with C14-C20 saturated fatty acids being more preferred.

Examples of the metals of the fatty acid metal salts include alkali metals such as potassium and sodium, alkaline earth metals such as magnesium, calcium, and barium, zinc, nickel, and molybdenum. These may be used alone or in combinations of two or more. Zinc or calcium is preferred among these, with zinc being more preferred.

Examples of the amide esters include fatty acid amide esters containing the above-mentioned saturated or unsaturated fatty acids as constituent components. These may be used alone or in combinations of two or more.

The fatty acid amides may be saturated or unsaturated fatty acid amides. These may be used alone or in combinations of two or more. Examples of the saturated fatty acid amides include N-(1-oxooctadecyl)sarcosinamide, stearamide, and behenamide. Examples of the unsaturated fatty acid amides include oleamide and erucamide.

Specific examples of the mixtures of fatty acid metal salts with amide esters include Aflux 16 available from Rhein Chemie, which is a mixture of a fatty acid calcium salt with an amide ester.

Specific examples of the mixtures of fatty acid metal salts with fatty acid amides include WB16 available from Struktol, which is a mixture of a fatty acid calcium salt with a fatty acid amide.

The processing aids may be commercially available from Rhein Chemie, Struktol, etc.

The amount of the processing aids per 100 parts by mass of the elastomer components (preferably rubber components) is preferably 0.5 parts by mass or more, more preferably 2 parts by mass or more, but is preferably 10 parts by mass or less, more preferably 6 parts by mass or less. When the amount is within the range indicated above, the advantageous effect tends to be better achieved.

In addition to the above-described components, the compositions may contain additives commonly used in the tire industry, such as organic peroxides. The amount of each of the additives is preferably 0.1 to 200 parts by mass per 100 parts by mass of the elastomer components (preferably rubber components).

The compositions may be prepared, for example, by kneading the components using a rubber kneading machine such as an open roll mill or a Banbury mixer, and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 110°C. Then, the composition obtained after kneading vulcanizing agents and vulcanization accelerators is usually vulcanized by press vulcanization, for example. The vulcanization temperature is usually 130 to 190°C, preferably 150 to 185°C. The vulcanization time is usually 5 to 30 minutes.

The compositions may be used in tire components (i.e., as tire compositions) such as treads (cap treads), sidewalls, base treads, undertreads, clinches, bead apexes, breaker cushion rubbers, rubbers for carcass cord topping, insulations, chafers, and innerliners, and side reinforcement layers of run-flat tires. The compositions are suitable for use in treads (cap treads), among others. For a tread consisting of a cap tread and a base tread, the compositions can be suitably used in the cap tread.

The tires of the present invention may be produced from the compositions by usual methods. Specifically, an unvulcanized composition containing additives as needed may be extruded into the shape of a tire component (in particular, a tread (cap tread)) and then formed and assembled with other tire components in a usual manner in a tire building machine to build an unvulcanized tire, which may then be heated and pressurized in a vulcanizer to produce a tire.

The tires may include a tread which at least partially or fully includes any of the compositions.

Non-limiting examples of the tires include pneumatic tires, solid tires, and airless tires. Pneumatic tires are preferred among these.

The tires may be suitably used as tires for passenger vehicles, large passenger vehicles, large SUVs, trucks and buses, or two-wheeled vehicles, racing tires, winter tires (studless winter tires, cold weather tires, snow tires, studded tires), all-season tires, run-flat tires, aircraft tires, mining tires, or other tires. The tires are more suitable for use as racing tires, among others. Herein, racing tires refer to tires for use in racing such as karting.

EXAMPLES

The present invention is specifically described with reference to, but not limited to, examples.

The chemicals used in the examples and comparative examples are listed below.

SBR 1: SLR6430 (S-SBR, styrene content: 40% by mass, oil extended product containing 37.5 parts by mass of oil per 100 parts by mass of rubber component) available from TRINSEO
SBR 2: SBR1502 (non-oil extended, styrene content: 25% by mass) available from Zeon Corporation
NR: TSR20 (natural rubber)
BR: BR730 (rare earth-catalyzed BR synthesized using Nd catalyst, cis content: 97% by mass, vinyl content: 0.9% by mass) available from JSR Corporation
Thermoplastic elastomer 1: D1161 (SIS) available from Kraton Polymers
Thermoplastic elastomer 2: Tuftec P2000 (SEBS) available from Asahi Kasei Corporation
Carbon black: N134 ($N_2SA$: 148 $m^2/g$) available from Cabot Japan K.K.
Silica: 9100Gr ($N_2SA$: 235 $m^2/g$) available from Degussa
Aluminum hydroxide: HIGILITE H-43 (average primary particle size: 1 $\mu m$) available from Showa Denko K.K.
Ester plasticizer 1: tris(2-ethylhexyl) phosphate (Tg: -70°C) available from Daihachi Chemical Industry Co., Ltd.
Ester plasticizer 2: di(2-ethylhexyl) sebacate (Tg: - 65°C) available from Daihachi Chemical Industry Co., Ltd.
Ester plasticizer 3: di(2-ethylhexyl) adipate (Tg: - 70°C) available from Daihachi Chemical Industry Co., Ltd.
Resin 1 (hydrogenated dicyclopentadiene resin): T-REZ OP501 (hydrogenated DCPD resin, softening point: 140°C, dicyclopentadiene-derived unit content: 100% by mass) available from ENEOS Corporation
Resin 2 (dicyclopentadiene-aromatic compound copolymer resin): Oppera PR-383 (aromatic content: 9.6% by mass, softening point: 103°C, Mw: 770) available from Exxon Mobil
Resin 3 (unhydrogenated dicyclopentadiene resin): DCPD resin (product code: DO443, unhydrogenated DCPD resin, softening point: 140°C, dicyclopentadiene-derived unit content: 100% by mass) available from Tokyo Chemical Industry Co., Ltd.
Resin 4: SYLVARES SA85 (a copolymer of $\alpha$-methylstyrene and styrene, softening point: 85°C) available from KRATON
Liquid polymer: hydrogenated liquid SBR prepared in the production example below (styrene content: 55% by mass, hydrogenation degree: 70% by mass, weight average molecular weight: 8000)
Oil: Diana Process NH-70S (aromatic process oil) available from Idemitsu Kosan Co., Ltd.
Wax: Ozoace wax available from Nippon Seiro Co., Ltd.
Silane coupling agent: NXT (a silane coupling agent of formula (III) in which p = 2, q = 3, and k = 7) available from Momentive
Antioxidant 1: NOCRAC 6C (N-(1,3-dimethylbutyl)-N'-phenyl-p-phenylenediamine, 6PPD) available from Ouchi

Shinko Chemical Industrial Co., Ltd.
Antioxidant 2: NOCRAC RD (2,2,4-trimethyl-1,2-dihydroquinoline polymer) available from Ouchi Shinko Chemical Industrial Co., Ltd.
Processing aid: EF44 (zinc salt of saturated fatty acid) available from Struktol
Stearic acid: TSUBAKI available from NOF Corporation
Zinc oxide: zinc oxide #2 available from Mitsui Mining & Smelting Co., Ltd.
Sulfur: HK-200-5 (5% oil-containing powdered sulfur) available from Hosoi Chemical Industry Co., Ltd.
Vulcanization accelerator 1: NOCCELER D (N,N'-diphenylguanidine) available from Ouchi Shinko Chemical Industrial Co., Ltd.
Vulcanization accelerator 2: NOCCELER NS (N-tert-butyl-2-benzothiazolylsulfenamide) available from Ouchi Shinko Chemical Industrial Co., Ltd.

(Production Example)

A sufficiently nitrogen-purged heat-resistant reaction vessel was charged with n-hexane, styrene, butadiene, TMEDA, and n-butyllithium, followed by stirring at 50°C for five hours to cause a polymerization reaction.
Next, the reaction solution was stirred while supplying hydrogen gas at a pressure of 0.4 MPa gauge to react the unreacted polymer terminal lithium with hydrogen into lithium hydride. Hydrogenation was performed using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature, and the hydrogen pressure was returned to an ordinary pressure. Then, the reaction solution was drawn from the reaction vessel and introduced into water with stirring. The solvent was removed by steam stripping to give a hydrogenated liquid styrene-butadiene rubber.

(Examples and Comparative Examples)

The chemicals other than the sulfur and vulcanization accelerators in the formulation amounts shown in Table 1 or 2 were kneaded in a Banbury mixer at 165°C for four minutes to give a kneaded mixture. Then, the kneaded mixture was kneaded with the sulfur and vulcanization accelerators in an open roll mill at 80°C for four minutes to give an unvulcanized rubber composition.
The unvulcanized rubber composition was extruded into the shape of a tread and assembled with other tire components in a tire building machine to build an unvulcanized tire. The unvulcanized tire was press-vulcanized at 150°C for 10 minutes to prepare a test kart tire (tire size: 11×7.10-5).
The test kart tires prepared as above were evaluated for the following items. Tables 1 and 2 show the results. It should be noted that Comparative Examples 1-1 and 2-1 are used as standards of comparison in Tables 1 and 2, respectively.

<Low-temperature grip performance>

A kart with the test kart tires was run 10 laps around a circuit track of about 5 km per lap. The difference between the average of the first to third lap times and the best lap time was determined and expressed as an index relative to the standard comparative example (= 100). A higher index indicates a smaller difference between the average of the first to third lap times and the best lap time and better low-temperature grip performance (low-temperature grip performance during early phase of running).

Indexation formula: (Difference between average of first to third lap times and best lap time of standard comparative example)/(Difference between average of first to third lap times and best lap time of each example)×100

<High-temperature grip performance>

A kart with the test kart tires was run 10 laps around a circuit track of about 5 km per lap. The difference between the average of the eighth to tenth lap times and the best lap time was determined and expressed as an index relative to the standard comparative example (= 100). A higher index indicates a smaller difference between the average of the eighth to tenth lap times and the best lap time and better high-temperature grip performance (high-temperature grip

performance during late phase of running).

Indexation formula: (Difference between average of eighth to tenth lap times and best lap time of standard comparative example)/(Difference between average of eighth to tenth lap times and best lap time of each example)×100

[Table 1]

| | | Comp. Ex. 1-1 | Comp. Ex. 1-2 | Comp. Ex. 1-3 | Comp. Ex. 1-4 | Comp. Ex. 1-5 | Comp. Ex. 1-6 | Ex. 1-1 | Ex. 1-2 | Ex. 1-3 | Ex. 1-4 | Ex. 1-5 | Ex. 1-6 | Ex. 1-7 | Ex. 1-8 | Ex. 1-9 |
|---|---|---|---|---|---|---|---|---|---|---|---|---|---|---|---|---|
| Amount (parts by mass) | SBR 1 | 41.25 | 41.25 | 41.25 | 41.25 | 41.25 | 41.25 | 41.25 | 41.25 | 41.25 | 41.25 | 41.25 | 41.25 | 41.25 | 41.25 | 41.25 |
| | SBR 2 | 70 | 70 | 70 | 70 | 70 | 70 | 70 | 70 | 70 | 70 | 60 | 60 | 70 | 70 | 70 |
| | NR | | | | | | | | | | | | | | | |
| | BR | | | | | | | | | | | | | | | |
| | Thermoplastic elastomer 1 | | | | | | | | | | | 10 | | | | |
| | Thermoplastic elastomer 2 | | | | | | | | | | | | 10 | | | |
| | Carbon black | 80 | 105 | 105 | 105 | 80 | 105 | 105 | 105 | 105 | 120 | 105 | 105 | 105 | 105 | 105 |
| | Silica | | | | | | | | | | | | | | | |
| | Aluminum hydroxide | 5 | 5 | 5 | 5 | 5 | 5 | 5 | 5 | 5 | 5 | 5 | 5 | 5 | 5 | 5 |
| | Ester plasticizer 1 | | | 5 | | 5 | 5 | 5 | 5 | 5 | 5 | 5 | 5 | | | 5 |
| | Ester plasticizer 2 | | | | | | | | | | | | | 5 | | |
| | Ester plasticizer 3 | | | | | | | | | | | | | | 5 | |
| | Resin 1 | | | | 10 | 10 | | 10 | 20 | 15 | 15 | 15 | 15 | 15 | 15 | |
| | Resin 2 | | | | | | | | | | | | | | | 15 |
| | Resin 3 | | | | | | 10 | | | | | | | | | |
| | Resin 4 | | | | | | | | | 5 | 5 | 5 | 5 | 5 | 5 | 5 |
| | Liquid polymer | 3 | 3 | 3 | 3 | 3 | 3 | 3 | 3 | 3 | 3 | 3 | 3 | 3 | 3 | 3 |
| | Oil | 33 | 33 | 28 | 23 | 18 | 18 | 18 | 18 | 13 | 13 | 13 | 13 | 13 | 13 | 13 |
| | Wax | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 |
| | Silane coupling agent | | | | | | | | | | | | | | | |
| | Antioxidant 1 | 1 | 1 | 1 | 1 | 1 | 1 | 1 | 1 | 1 | 1 | 1 | 1 | 1 | 1 | 1 |
| | Antioxidant 2 | 1 | 1 | 1 | 1 | 1 | 1 | 1 | 1 | 1 | 1 | 1 | 1 | 1 | 1 | 1 |
| | Processing aid | 3 | 3 | 3 | 3 | 3 | 3 | 3 | 3 | 3 | 3 | 3 | 3 | 3 | 3 | 3 |
| | Stearic acid | 2 | 2 | 2 | 2 | 2 | 2 | 2 | 2 | 2 | 2 | 2 | 2 | 2 | 2 | 2 |
| | Zinc oxide | 2.8 | 2.8 | 2.8 | 2.8 | 2.8 | 2.8 | 2.8 | 2.8 | 2.8 | 2.8 | 2.8 | 2.8 | 2.8 | 2.8 | 2.8 |
| | Sulfur | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 |
| | Vulcanization accelerator 1 | | | | | | | | | | | | | | | |
| | Vulcanization accelerator 2 | 7.2 | 7.2 | 7.2 | 7.2 | 7.2 | 7.2 | 7.2 | 7.2 | 7.2 | 7.2 | 7.2 | 7.2 | 7.2 | 7.2 | 7.2 |
| Total mass (parts by mass) | | 252.35 | 277.35 | 277.35 | 277.35 | 252.35 | 277.35 | 277.35 | 287.35 | 282.35 | 297.35 | 282.35 | 282.35 | 282.35 | 282.35 | 282.35 |
| Total styrene content (% by mass) | | 29.5 | 29.5 | 29.5 | 29.5 | 29.5 | 29.5 | 29.5 | 29.5 | 29.5 | 29.5 | 27 | 27 | 29.5 | 29.5 | 29.5 |
| Evaluation result | Low-temperature grip performance | 100 | 90 | 110 | 82 | 112 | 95 | 103 | 105 | 105 | 100 | 102 | 100 | 107 | 104 | 100 |
| | High-temperature grip performance | 100 | 113 | 95 | 120 | 89 | 110 | 104 | 115 | 118 | 123 | 121 | 123 | 120 | 119 | 123 |

[Table 2]

| | | Comp. Ex. 2-1 | Comp. Ex. 2-2 | Comp. Ex. 2-3 | Comp. Ex. 2-4 | Comp. Ex. 2-5 | Ex. 2-1 | Ex. 2-2 | Ex. 2-3 | Ex. 2-4 | Ex. 2-5 | Ex. 2-6 | Ex. 2-7 |
|---|---|---|---|---|---|---|---|---|---|---|---|---|---|
| Amount (parts by mass) | SBR 1 | 75.63 | 75.63 | 75.63 | 75.63 | 75.63 | 75.63 | 75.63 | 75.63 | 75.63 | 75.63 | 55.00 | 68.75 |
| | SBR 2 | | | | | | | | | | | | |
| | NR | 35 | 35 | 35 | 35 | 35 | 35 | 35 | 35 | 35 | 35 | 50 | 45 |
| | BR | 10 | 10 | 10 | 10 | 10 | 10 | 10 | 10 | 10 | 10 | 10 | 5 |
| | Thermoplastic elastomer 1 | | | | | | | | | | | | |
| | Thermoplastic elastomer 2 | | | | | | | | | | | | |
| | Carbon black | 5 | 5 | 5 | 5 | 5 | 5 | 5 | 5 | 5 | 5 | 5 | 5 |
| | Silica | 75 | 105 | 105 | 105 | 75 | 105 | 105 | 105 | 105 | 120 | 105 | 105 |
| | Aluminum hydroxide | 5 | 5 | 5 | 5 | 5 | 5 | 5 | 5 | 5 | 5 | 5 | 5 |
| | Ester plasticizer 1 | | | 5 | | 5 | 5 | 5 | 5 | 2 | 2 | 2 | 2 |
| | Ester plasticizer 2 | | | | | | | | | | | | |
| | Ester plasticizer 3 | | | | | | | | | | | | |
| | Resin 1 | | | | 10 | 10 | 10 | 15 | 10 | 10 | 10 | 10 | 10 |
| | Resin 2 | | | | | | | | | | | | |
| | Resin 3 | | | | | | | | | | | | |
| | Resin 4 | | | | | | | | 5 | 5 | 5 | 5 | 5 |
| | Liquid polymer | 3 | 3 | 3 | 3 | 3 | 3 | 3 | 3 | 3 | 3 | 3 | 3 |
| | Oil | 25.00 | 25.00 | 20.00 | 15.00 | 10.00 | 10.00 | 5.00 | 5.00 | 8.00 | 8.00 | 13.62 | 9.87 |
| | Wax | 1.7 | 1.7 | 1.7 | 1.7 | 1.7 | 1.7 | 1.7 | 1.7 | 1.7 | 1.7 | 1.7 | 1.7 |
| | Silane coupling agent | 6.0 | 8.4 | 8.4 | 8.4 | 6.0 | 8.4 | 8.4 | 8.4 | 8.4 | 9.6 | 8.4 | 8.4 |
| | Antioxidant 1 | 1 | 1 | 1 | 1 | 1 | 1 | 1 | 1 | 1 | 1 | 1 | 1 |
| | Antioxidant 2 | 1 | 1 | 1 | 1 | 1 | 1 | 1 | 1 | 1 | 1 | 1 | 1 |
| | Processing aid | 3 | 3 | 3 | 3 | 3 | 3 | 3 | 3 | 3 | 3 | 3 | 3 |
| | Stearic acid | 2 | 2 | 2 | 2 | 2 | 2 | 2 | 2 | 2 | 2 | 2 | 2 |
| | Zinc oxide | 2.8 | 2.8 | 2.8 | 2.8 | 2.8 | 2.8 | 2.8 | 2.8 | 2.8 | 2.8 | 2.8 | 2.8 |
| | Sulfur | 1.4 | 1.4 | 1.4 | 1.4 | 1.4 | 1.4 | 1.4 | 1.4 | 1.4 | 1.4 | 1.4 | 1.4 |
| | Vulcanization accelerator 1 | 0.5 | 0.5 | 0.5 | 0.5 | 0.5 | 0.5 | 0.5 | 0.5 | 0.5 | 0.5 | 0.5 | 0.5 |
| | Vulcanization accelerator 2 | 2.1 | 2.1 | 2.1 | 2.1 | 2.1 | 2.1 | 2.1 | 2.1 | 2.1 | 2.1 | 2.1 | 2.1 |
| Total mass (parts by mass) | | 255.13 | 287.53 | 287.53 | 287.53 | 255.13 | 287.53 | 287.53 | 287.53 | 287.53 | 303.73 | 287.52 | 287.52 |
| Total styrene content (% by mass) | | 22 | 22 | 22 | 22 | 22 | 22 | 22 | 22 | 22 | 22 | 16 | 20 |
| Evaluation result | Low-temperature grip performance | 100 | 94 | 112 | 86 | 110 | 111 | 110 | 108 | 103 | 100 | 119 | 115 |
| | High-temperature grip performance | 100 | 108 | 92 | 115 | 91 | 100 | 103 | 107 | 117 | 111 | 103 | 110 |

Ex.: Example

Comp. Ex.: Comparative Example

As shown in Tables 1 and 2, the overall performance in terms of high-temperature grip performance and low-temperature grip performance (expressed as the sum of the two indices: high-temperature grip performance and low-temperature grip performance) was improved in the examples which contained at least one elastomer component, at least one filler, at least one cyclopentadiene resin consisting of a hydrogenated dicyclopentadiene resin and/or a dicyclopentadiene-aromatic compound copolymer resin, and at least one ester plasticizer, and which satisfied the relationship: Elastomer component content ≤ Filler content.

The overall performance in terms of high-temperature grip performance and low-temperature grip performance of a tire is considered good when the tire has a high-temperature grip performance index of 100 or higher and a low-temperature grip performance index of 100 or higher to obtain a sum of the two indices of higher than 200.

Moreover, comparisons between Example 1-1 and Comparative Examples 1-2 to 1-4 and between Example 2-1 and Comparative Examples 2-2 to 2-4 reveal that the examples combining the ester plasticizer with the dicyclopentadiene-aromatic compound copolymer resin and/or hydrogenated dicyclopentadiene resin exhibited synergistically improved overall performance in terms of high-temperature grip performance and low-temperature grip performance.

The present invention aims to provide tire compositions which provide improved overall performance in terms of high-temperature grip performance and low-temperature grip performance, and tires including the tire compositions. The tire compositions contain at least one elastomer component, at least one filler, at least one cyclopentadiene resin, and at least one ester plasticizer, the at least one cyclopentadiene resin consisting of a hydrogenated dicyclopentadiene resin and/or a dicyclopentadiene-aromatic compound copolymer resin, the tire compositions satisfying the following relationship: Elastomer component content ≤ Filler content.

## Claims

**1.** A tire, comprising a tire component comprising a tire composition, the tire composition comprising:

at least one elastomer component;
at least one filler;
at least one cyclopentadiene resin; and
at least one ester plasticizer,
the at least one cyclopentadiene resin consisting of a hydrogenated dicyclopentadiene resin and/or a dicyclopentadiene-aromatic compound copolymer resin,
the tire composition satisfying the following relationship:

$$\text{Elastomer component content} \leq \text{Filler content.}$$

**2.** The tire according to claim 1,
wherein the tire composition satisfies the following relationship:

$$\text{Ester plasticizer content} \leq \text{Cyclopentadiene resin content.}$$

**3.** The tire according to claim 1 or 2,
wherein the at least one elastomer component has a total styrene content of 10% by mass or higher.

**4.** The tire according to any one of claims 1 to 3,
wherein the tire composition comprises a liquid aromatic polymer having a weight average molecular weight of 10,000 or less.

**5.** The tire according to any one of claims 1 to 4,
wherein the tire composition comprises at least one second resin that is different from the cyclopentadiene resin, and satisfies the following relationship:
Second resin content ≤ Cyclopentadiene resin content, and
the second resin comprises an aromatic ring-containing resin.

6. The tire according to any one of claims 1 to 5, wherein the tire composition comprises a silica having a nitrogen adsorption specific surface area of 170 $m^2/g$ or more.

7. The tire according to any one of claims 1 to 6, wherein the tire composition comprises 100 to 125 parts by mass of the at least one filler per 100 parts by mass of the at least one elastomer component.

8. The tire according to any one of claims 1 to 7, wherein the tire composition comprises a mercapto silane coupling agent.

9. The tire according to any one of claims 1 to 8, wherein the tire composition comprises 80 parts by mass or less of the at least one cyclopentadiene resin per 100 parts by mass of the at least one elastomer component.

10. The tire according to any one of claims 1 to 9, wherein the tire component is a tread.

Europäisches Patentamt
European Patent Office
Office européen des brevets

# EUROPEAN SEARCH REPORT

Application Number
EP 21 15 3160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | US 2018/340055 A1 (DE GAUDEMARIS BENOIT [FR] ET AL) 29 November 2018 (2018-11-29)<br>* examples T1,T4-T6,C1-C4; tables 1,2 * | 1,2,7,10<br>3-6,8,9 | INV.<br>C08L21/00<br>B60C1/00<br>C08L45/00<br>C08K3/36 |
| Y<br>A | US 2010/063178 A1 (HOGAN TERRENCE E [US] ET AL) 11 March 2010 (2010-03-11)<br>* paragraphs [0033], [0049], [0050]; claims 1-16; tables 1,2,3,4,5,6,7,8 * | 1,2,7-10<br>3-6 | |
| Y | US 2010/204358 A1 (LOPITAUX GARANCE [FR]) 12 August 2010 (2010-08-12)<br>* claims 5,61.62; tables 1,2 * | 1 | |
| Y<br>A | WO 2019/069017 A1 (MICHELIN & CIE [FR]) 11 April 2019 (2019-04-11)<br>* paragraphs [0212] - [0214]; examples CP7,CP8 * | 1-3,8,10<br>4-7,9 | |
| Y<br>A | EP 3 608 126 A1 (SUMITOMO RUBBER IND [JP]) 12 February 2020 (2020-02-12)<br>* paragraph [0133]; examples 11,14; table 1 * | 1-3,8-10<br>4-7 | TECHNICAL FIELDS SEARCHED (IPC) |
| A | EP 3 231 840 A1 (SUMITOMO RUBBER IND [JP]) 18 October 2017 (2017-10-18)<br>* paragraph [0079]; tables 1,2 * | 1-10 | C08L<br>B60C<br>C08F<br>C08K |
| A | EP 3 434 722 A1 (SUMITOMO RUBBER IND [JP]) 30 January 2019 (2019-01-30)<br>* paragraph [0049] * | 1-10 | |

The present search report has been drawn up for all claims

1

| Place of search | Date of completion of the search | Examiner |
|---|---|---|
| Munich | 29 June 2021 | Barker, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 15 3160

This annex lists the patent family members relating to the patent documents cited in the above-mentioned European search report. The members are as contained in the European Patent Office EDP file on
The European Patent Office is in no way liable for these particulars which are merely given for the purpose of information.

29-06-2021

| Patent document cited in search report | Publication date | Patent family member(s) | Publication date |
|---|---|---|---|
| US 2018340055 A1 | 29-11-2018 | CA 3001197 A1 | 20-04-2017 |
| | | CN 108137869 A | 08-06-2018 |
| | | EP 3362512 A1 | 22-08-2018 |
| | | FR 3042504 A1 | 21-04-2017 |
| | | JP 2018536044 A | 06-12-2018 |
| | | US 2018340055 A1 | 29-11-2018 |
| | | WO 2017064235 A1 | 20-04-2017 |
| US 2010063178 A1 | 11-03-2010 | US 2010063178 A1 | 11-03-2010 |
| | | US 2013197140 A1 | 01-08-2013 |
| US 2010204358 A1 | 12-08-2010 | EP 2160299 A2 | 10-03-2010 |
| | | FR 2916201 A1 | 21-11-2008 |
| | | JP 2010526923 A | 05-08-2010 |
| | | US 2010204358 A1 | 12-08-2010 |
| | | WO 2008141748 A2 | 27-11-2008 |
| WO 2019069017 A1 | 11-04-2019 | CN 111201146 A | 26-05-2020 |
| | | EP 3691917 A1 | 12-08-2020 |
| | | FR 3071842 A1 | 05-04-2019 |
| | | US 2020332092 A1 | 22-10-2020 |
| | | WO 2019069017 A1 | 11-04-2019 |
| EP 3608126 A1 | 12-02-2020 | EP 3608126 A1 | 12-02-2020 |
| | | EP 3792078 A1 | 17-03-2021 |
| | | JP 2020023600 A | 13-02-2020 |
| | | US 2020040168 A1 | 06-02-2020 |
| EP 3231840 A1 | 18-10-2017 | CN 107286408 A | 24-10-2017 |
| | | EP 3231840 A1 | 18-10-2017 |
| | | JP 6790429 B2 | 25-11-2020 |
| | | JP 2017190364 A | 19-10-2017 |
| | | US 2017291450 A1 | 12-10-2017 |
| EP 3434722 A1 | 30-01-2019 | CN 109071883 A | 21-12-2018 |
| | | EP 3434722 A1 | 30-01-2019 |
| | | JP 6798141 B2 | 09-12-2020 |
| | | JP 2017203111 A | 16-11-2017 |
| | | US 2019176520 A1 | 13-06-2019 |
| | | WO 2017195392 A1 | 16-11-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008101127 A
- JP 59161415 A
- JP 2016180118 A